# EUROPEAN PATENT APPLICATION

(11) **EP 2 565 586 A1**
(43) Date of publication of application: **06.03.2013**
(21) Application number: 11179338.6
(22) Date of filing: 30.08.2011
(51) Int. Cl.: G01D 4/00, H04L 9/32, H02J 13/00

(54) **Pricing system and method for utility consumptions within a smart grid**

(71) Applicant: Nagravision S.A., 1033 Cheseaux-sur-Lausanne (CH)
(72) Inventor: Le Buhan, Corinne, 1619 Les Paccots (CH)
(74) Representative: Leman Consulting S.A.

(57) **Abstract**

Pricing method for utility consumptions within a smart grid comprising a plurality of utility meters (U1-U8) each connected to at least one utility management center (P1-P3) through an intermediate data concentrator (C1-C4), the method comprising the steps of:
- receiving, from each utility management center (P1-P3), at least a tariff table comprising at least one time interval [DT1, DT2] per 24 hours, and a rate associated to said time interval,
- selecting, by said data concentrator, the lowest rate for each time interval [DT1, DT2] among the rates of all time intervals of all tariff tables,
- receiving, from said utility meter, utility meter messages DTup_{u,c}, each comprising: a metering data measurement DTup reported by the utility meter which sent this message DTup_{u,c}, its utility meter identifier Uid, a data concentrator identifier DCid and a management center identifier Pid,
- determining, on the basis of one or several metering data measurements DTup, a metering counter differential consumption value ΔCPT calculated by difference of two metering counter consumption indexes CPT measured by the utility meter within a time period interval ΔT,
- assigning to said consumption value ΔCPT the utility management center suggesting the lowest rate for the time period interval ΔT,
- establishing, for each management center, a report containing at least the metering counter differential consumption value ΔCPT together with the utility meter identifier Uid to which this value ΔCPT refers,
- sending said report from said data concentrator to this utility management center.

## Description

### TECHNICAL FIELD

This invention concerns the field of utility meters that are monitored and managed from at least one utility management center through at least one intermediate data concentrator in a communication network.

### BACKGROUND

The on-going deregulation in worldwide energy distribution markets is driving the need for smart utility distribution grids and smart meters, enabling both utility providers and consumers to monitor the detailed consumption of an end user at any time through open communication networks. The energy market is particularly concerned as of today but related issues are also relevant to other utility markets such as water or gas.

While a number of legacy meters already implement some point-to-point Automated Metering Reading (AMR) protocols using for instance standard optical or modem interfaces, they are not able to interact with either the end user home area network devices or the remote utility monitoring facilities using wireless or power line communication networks. The industry answer to this regulatory requirement in the next decade will therefore consist in swapping the legacy meters for so-called smart meters.

Smart meters enable utility providers to monitor the detailed consumption of an end user at any time through open communication networks. The consumption measurement sampling granularity can then be much finer than in legacy systems where the meters were manually controlled about once a year. It is also possible to support multiple tariffs from different providers and adapt them much more frequently in accordance with the finer measurement periods.

From the utility provider perspective, as there will be no more local measurement and physical control of the meter functionality by authorized personnel, the smart metering architecture needs careful design to ensure secure, tamper resistant and trusted data collection and transmission from the smart meters to the provider utility services facility. Various solutions can be defined based on state of the art cryptography protocols and a key management system under the control of the utility provider. Those solutions typically require the smart meter to generate its measurement reporting messages specifically for a given utility provider. In a deregulated market where the smart meter is able to negotiate its tariffs with multiple providers, this results in increased bandwidth and processing needs as well as tamper resistant design complexity, manufacturing costs and maintenance costs for the utility meters.

There is therefore a need for a more flexible smart metering network topology to optimize the smart metering operations, communications, and security.

### SUMMARY OF THE INVENTION

The present invention suggests a metering reporting communication method for pricing of utility consumptions metered by utility meters within a communication network comprising at least one data concentrator proxy located as intermediate device between utility meters and at least one utility provider. More particularly, the present invention refers to a pricing method for utility consumptions within a smart grid comprising a plurality of utility meters each associated and connected to at least one utility management center through an intermediate data concentrator identified by a data concentrator identifier DCid, each utility meter being identified by a utility meter identifier Uid and being adapted to produce and send utility meter messages DTup_{u,c} to the data concentrator, each of the data concentrators being adapted to produce and to send reports to management centers which are each identified by a management center identifier Pid, this method comprising the steps of:
- receiving, by the data concentrator, at least a tariff table from each of said utility management centers; such a tariff table comprising at least one time interval [DT1, DT2] per a period of twenty-four hours and a rate associated to this time interval,
- selecting, by the data concentrator, the lowest rate for each time interval [DT1, DT2] among the rates of all time intervals from all these tariff tables, in order to derive an advantageous tariff table,
- receiving, by the data concentrator, the utility meter messages DTup_{u,c} from the utility meter, each of these utility meter messages DTup_{u,c} comprising: a metering data measurement DTup reported by the utility meter which sent this message DTup_{u,c}, its utility meter identifier Uid, the data concentrator identifier DCid and the management center identifier Pid,
- determining, on the basis of one or several metering data measurements DTup, a metering counter differential consumption value ΔCPT calculated by difference of two metering counter consumption indexes CPT measured by the utility meter within a time period interval ΔT defined by a first time T1 and by a second time T2,
- assigning to this metering counter differential consumption value ΔCPT the utility management center suggesting the lowest rate for the time period interval ΔT comprised between said first time T1 and said second time T2,
- establishing, for each management center, a report containing at least the metering counter differential consumption value ΔCPT assigned to this management center together with the utility meter identifier Uid to which this value ΔCPT refers,
- sending the report from the data concentrator towards the aforementioned utility management center.

The present invention also refers to a system for implementing the above mentioned method.

### BRIEF DESCRIPTION OF THE DRAWINGS

The present invention will be better understood thanks to the attached figures in which:
Figure 1 shows a schematic illustration of a star-shaped network comprising end user utility meters, data concentrators and utility provider management centers.
Figure 2 shows two tariff tables provided by two different utility providers and a derived advantageous tariff table computed by the data concentrator on the basis of said two tariff tables.

### DETAILED DESCRIPTION

The proposed solution comprises a data concentrator which is connected both to the smart meter and to a number of utility providers.

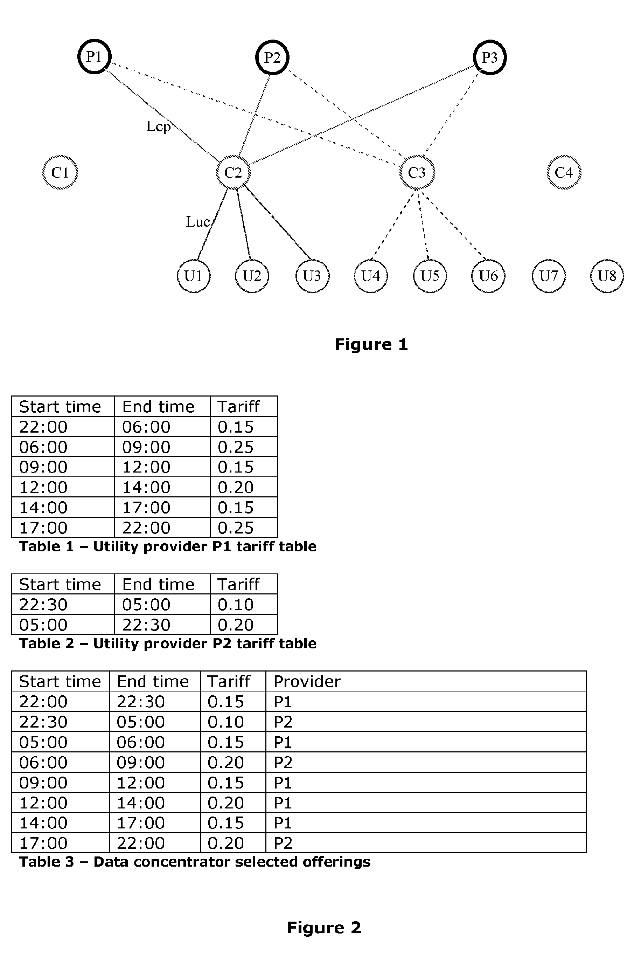

Figure 1 illustrates one possible smart grid network topology, based on a star-shaped network of subset of end user utility meters U1, U2, U3, which are connected to an intermediate data concentrator C2. This data concentrator being at its turn connected to a plurality of utility provider management center. The concentrator is typically co-located with the low-voltage utility distribution to a neighborhood and monitors up to several thousands of utility meters. In a deregulated utility market, the data concentrator C2 can be further connected to multiple utility providers P1, P2, P3 who are offering competing utility delivery offerings to the end user (Figure 1).

Each utility management center P1, P2, P3 implements various utility management processes such as data management billing, load management and outage control, and queries and controls the data concentrators C1, C2, C3, C4 accordingly through the smart grid global communication network links Lpc.

Each data concentrator C1, C2, C3, C4 comprises functional components in charge with enforcing meter usage monitoring and reporting to the utility management center by means of secure communications with the individual meters through the local communication network links Luc on the one hand and with the utility providers management centers through the global smart grid network links Lcp on the other hand.

Each communication network link Lcp, Luc from Figure 1 is built over a utility metering communication physical network, such as, but not limited to, a cable network, the power line wire, a wireless network, or a combination thereof, and employs a communication networking protocol, such as, but not limited to, Internet Protocol (IP) v4 or v6. On top of those networks, communication messaging for smart grids and smart meters is largely inspired by the telecommunication industry and subject to emerging standardization by international committees such as ANSI or IEC.

In a deregulated market, each end user can choose its preferred utility provider. For instance utility provider P2 is selected for utility meters U1 and U3 while utility provider P1 is chosen for utility meter U2. As utility offerings evolve towards a finer granularity and more frequent renewal of the tariffs, the utility meters have to process them accordingly and report their utility consumption at a higher rate than before, for instance every 15 minutes. This overloads both the limited meter processing power and the communication network between the utility providers and the utility meters.

This problem is avoided by a distributed computing system in which the data concentrator C establishes secure communications with each utility provider, receives the tariffs table and relevant information such as the amount of available utility that can be delivered to the individual meters from each utility provider, and selects the best offering based on this information. The utility provider may be a commercial provider, a state-controlled provider or even an end-user installation producing some utility amount that is reinjected into the utility delivery network.

The data concentrator C further establishes secure communications with each utility meter U, receives the regular utility consumption reports DTup_{u,c} from each utility meter U, and separately computes a consolidated report RTup_{u,p} intended for each utility provider P in line with the former offering selection. The advantage of this solution is that the utility meter only needs to establish, encrypt and sign one DTup_{u,c} message for the data concentrator C at any time, regardless of which utility provider is actually feeding it, to report its consumption without having to bear the selection of the detailed tariff which evolves over time and the computation of the consumption invoicing report accordingly. The utility meter messages DTup_{u,c} typically comprise at least one time and date DT and the metering counter consumption index CPT measured by the utility meter U at this time and date DT, or the metering counter differential consumption value ΔCPT measured between a first time T1, e.g. the former transmitted time and date DTₚᵣₑᵥ, and a second time T2, e.g. the current time and date DT_{curr}. In a simpler mode of implementation where the utility meter and the data concentrator communicate synchronously, i.e. on the basis of synchronized clocks where one clock is located within the utility meter and the other within the data concentrator, only the utility meter consumption index is transmitted to the data concentrator which is in charge with measuring the corresponding date and time. However, it should be noted that these two clocks do not need to have the same time basis, for instance the clock located within the data concentrator could be a common clock, whereas the clock of the utility meter could be merely a count-down or a means able to produce pulses. In a further alternative, the utility meter could transmit only its consumption index to the data concentrator, only on request from the latter.

In order to identify their source and their destination in an open communication network, the DTup_{u,c} message also includes the source utility meter identifier and the destination data concentrator identifier. The latter identifiers may be an integral value uniquely associated with the equipment at manufacturing time, a network address identifier, or any combination thereof.

In order to ensure the integrity of the utility meter messages, they can be further signed so that the data concentrator authenticates that the metering report comes from a genuine utility meter source. In order to ensure the confidentiality of the utility meter messages as desired (for instance to ensure end user consumption data privacy), they can also be encrypted so that the utility meter data is only accessible by the authorized data concentrator destination.

In terms of security design, most smart grid standards require the establishment of a Public Key Infrastructure (PKI) where each node in the network is associated with a pair of public and private asymmetric cryptography keys, for instance a RSA key pair, and a chain of public key certificates signed by a trusted central authority, for instance X.509 certificates. In a simple implementation corresponding to the grid topology of Figure 1, in order to report its metering data measurement DTup, the utility meter U1 generates a random payload key Kp, encrypts it with the public key KpubC2 of the data concentrator C2, and encrypts and signs the data measurement DTup by means of Kp. It transmits (Kp)KpubC2 and (DTup)Kp in one or several messages to the data concentrator C2, which decrypts the Kp value by means of its unique, secret private key KprivC2, and then the payload data DTup by means of the formerly decrypted Kp key. In a more optimized implementation, a Secure Authenticated Channel (SAC) can be negotiated by the utility meter and the data concentrator to establish a longer term shared session key Ks. This session key Ks can then be used similarly to the former payload key Kp but repeatedly, for a certain period of time, to enforce communication message integrity and confidentiality in the point-to-point transmission between the utility meter and the data concentrator. The available offerings from the utility providers are represented by tariffs tables such as those represented by Figure 2 where a consumption unit invoicing value, for instance 0.15 cent per kw/h, is mapped to a date and time period interval [DT1,DT2], for instance from DT1=22:00 to DT2=22:30:00 every day. The tariff table has to comprise at least one time interval [DT1, DT2] per a period of twenty-four hours, and a rate associated to this time interval. By comparing the offerings from various providers, for instance Table 1 from provider P1 and Table 2 from provider P2, the data concentrator C2 identifies the best offering actual invoicing periods defined by a start time and date DT1 and end time and date DT2, for instance P1 from DT1 22:00 to DT2 22:30 at a rate of 0.15 as shown by Table 3 in Figure 2. Consequently, an advantageous tariff table (Table 3) can be derived and computed by the data concentrator on the basis of several tariff tables (Table 1 and Table 2). Preferably, the advantageous tariff table will be memorized within a memory of the data concentrator.

The data concentrator receives at regular intervals, for instance every 15 minutes, from each connected utility meter, a utility report message DTup_{u,c} comprising metering data measurement DTup sent from each connected utility meter, decrypts it as relevant, and verifies its signature. If the message is authenticated, the data concentrator derives the consumption values from the utility meter in the invoicing period interval [DT1, DT2] from the succession of transmitted counter values CPT, or differential values ΔCPT, defined as metering data measurement DTup. If the differential values ΔCPT has not yet been determined by the utility meter itself, the data concentrator derives the difference ΔCPT_{1,2} between the metering counter value CPT2 at a given time and date DT2 and the metering counter value CPT1 at a given time and date DT1. Thus, depending on the technical nature of the utility meter and its predefined task, the destination data concentrator has to determine the differential conception value ΔCPT on the basis of one or several metering data measurements. More generally, the metering data measurement DTup may comprise different data namely either:
- at least one metering counter consumption index CPT; or
- at least one metering counter consumption index CPT together with a time and date DT information resulting from a clock readable by said utility meter and corresponding to the moment where the counter consumption index has been measured; or
- directly the metering counter differential consumption value ΔCPT, e.g. if the utility meter is able to perform such a computation task.

In one embodiment, the data concentrator C then transmits the calculated difference ΔCPT_{1,2} to the utility provider P associated with the utility meter U during the tariff period [DT1, DT2]. Therefore, the data concentrator assigns the calculated differential consumption value ΔCPT to the utility management center P1-P3 offering the lowest rate for the time period interval ΔT during which this value ΔCPT has been measured. Thus, this value ΔCPT is sent, preferably together with the utility meter identifier Uid of said utility meter, from the destination data concentrator to the proper utility management center, i.e. the utility management center associated to the rate assigned to the differential consumption value ΔCPT.

In another embodiment, the data concentrator C collects and calculates for a utility meter, a sequence (i.e a plurality) of values ΔCPT_{1,2}, ΔCPT_{2,3}, ΔCPT_{3,4} for a given reporting period of time ΔRT ([RTa,RTb]), for instance one day, one week or one month, and records them into a memory of the data concentrator, e.g. under a utility meter consumption invoicing report MRup_{u,c,p}. After the end of the reporting period of time RTb, the data concentrator C in the proposed distributed computing system establishes secure communications with each utility provider P among P1, P2, P3 associated with each utility meter U and transmits the collected consumption values ΔCPT to the utility provider P, e.g. by sending the utility meter consumption invoicing report MRup_{u,c,p}. The advantage of this solution is that the utility provider only needs to process one utility meter consumption invoicing report message MRup_{u,c,p} for each reporting period of time, regardless of the actual fine gain granularity of the utility meter consumption reporting and regardless of the actual tariff updates during this period.

In order to identify their source and their destination in an open communication network, the utility meter consumption invoicing report message MRup_{u,c,p} also includes the source utility meter identifier Uid. Preferably, it further includes the destination data concentrator identifier DCid and the utility provider identifier Pid. These identifiers may be an integral value uniquely associated with the equipment at manufacturing time, a network address identifier, or any combination thereof.

In order to ensure the integrity of the utility meter consumption invoicing report message MRup_{u,c,p}, it can be signed so that the utility provider authenticates that the metering report comes from a genuine data concentrator source. In order to ensure the confidentiality of the utility meter consumption as desired (for instance to ensure end user privacy), the utility meter consumption invoicing report message MRup_{u,c,p} can also be encrypted so that the utility meter data is only accessible by the authorized utility provider.

In a further embodiment, the data concentrator C collects and calculates, for a plurality of utility meters which are all associated with a single utility management center (e.g. for each utility meter U1, U3 associated with utility provider P2), and records a sequence of values ΔCPT_U1_{1,2}, ΔCPT_U3_{1,2}, ΔCPT_U1_{2,3}, ΔCPT_U3_{2,3}, ΔCPT_U1_{3,4}, ΔCPT_U3_{3,4} for a given reporting period of time [RT1, RT2], for instance one day, one week or one month, for each utility meter U1, U3 associated with a utility provider P2, and records them, together with the utility meter identifier Uid to which each of these value refers, into a consolidated utility meter consumption invoicing report CR_{c,p}. After the end of the reporting period of time RT2, the data concentrator C in the proposed distributed computing system establishes secure communications with the utility provider P2 associated with the subset of utility meters U1, U3 and transmits the consolidated utility meter consumption invoicing report CR_{c,p} to the utility provider P2. The advantage of this solution is that each utility provider only needs to process one consolidated consumption invoicing report message CR_{c,p} for each data concentrator instead of each utility meter, for each period of time.

In order to identify their source and their destination in an open communication network, the consolidated consumption invoicing report message CR_{c,p} also includes a list of the source utility meters identifiers Uid, the destination data concentrator identifier DCid, and the utility provider identifier Pid. These identifiers may be an integral value uniquely associated with the equipment at manufacturing time, a network address identifier, or any combination thereof.

In order to ensure the integrity of the consolidated consumption invoicing report message CR_{,c,p}, it can be signed so that the utility provider authenticates that the metering report comes from a genuine data concentrator source. In order to ensure the confidentiality of the utility meters consumption as desired (for instance to ensure end user privacy), the utility meter consumption invoicing report message CR_{c,p} can also be encrypted so that the utility meters data is only accessible by the authorized utility provider. This makes it possible for the utility providers to collect the utility metering reports for invoicing at a lower rate than they negotiate their offerings with the data concentrators, for instance only once a month, regardless of how often the rate has been updated during the month. As there are many more utility meters than data concentrators and several utility providers serving them in a typical grid topology, significant bandwidth and processing power can be saved overall. This will be illustrated by the following example, given for illustration purposes only and not limitative: if 1000 meters in a local area were to report every 15 minutes to 5 possible utility providers, each of them would need to generate, secure and transmit 24*4*5=4800 messages per day and each utility provider would need to receive and process 24*4*1000 = 96000 messages per day just for this local area. With one possible proposed solution, the utility meter only generates, secures and transmits 24*4 messages per day to the data concentrator and does not need to establish individual secure communication channels with the 5 utility providers. The data concentrator is in charge with locally computing and consolidating the 1000 utility metering reports based on the preselected offerings and corresponding tariff tables from the 5 utility providers. It can then consolidate invoicing reporting to at most 5 providers, for instance only just once a day for 1000 utility meters, i.e. the utility provider only needs to receive and process max 1000 individual messages or one consolidated message for 1000 utility meters per day.

In the case where the network between the data concentrator and the utility meter is not reliable, it may occur that a utility metering message DTup is lost. In that configuration it is preferable to transmit, as metering data measurement DTup, the counter index CPT rather than a relative differential value ΔCPT, so that the data concentrator can still interpolate the missing consumption value from the last received one and the current one and derive an acceptable consumption invoice accordingly.

Alternately, the data concentrator may also send a receipt acknowledgement and/or a retransmission query to the utility meter.

The data concentrator may also further send information about the actual offering and/or invoicing as relevant to the end user, periodically, for instance after reporting consolidation to the utility providers.

The data concentrator may also further send a configuration message to the utility meter to update its reporting rate.

Preferably, each time messages or reports have to be exchanged, the method of the present invention performs a step aiming to establish a secure communication respectively for each utility meter U1-U8 connected to the destination data concentrator C1-C4 and for each data concentrator C1-C4 connected to said utility management center P1-P3. This communication being secured by signing and encrypting messages and reports respectively processed by the destination data concentrator C1-C4 and by the utility management center P1-P3. Messages and reports are processed only if they are identified as being authentic by authentication means.

The present invention also refers to a system able to implement the above disclosed method. To this end, it suggests a pricing system for utility consumptions within a smart grid comprising a plurality of utility meters U1-U8, these utility meters being each associated and connected to at least one utility management center P1-P3 through an intermediate data concentrator C1-C4, each data concentrator is identified by a data concentrator identifier DCid and each utility meters U1-U8 is identified by a utility meter identifier Uid. These utility meters are adapted to produce and send utility meter messages DTup_{u,c} towards the data concentrator with which they are connected or associated. Each data concentrator is adapted to produce and send reports to the management centers P1-P3, in particular to all management centers associated with the utility meters processed by this data concentrator, each management center being identified by a management center identifier Pid, this system comprising:
- connecting means for establishing communications through communication network links Luc connecting the data concentrator to the utility meters associated with this data concentrator, and through communication network links Lcp connecting this data concentrator to the utility management center, preferably to a plurality of utility management centers,
- receiving means, located within the data concentrator C1-C4, for receiving at least a tariff table from each utility management centers P1-P3 connected to this data concentrator; this tariff table comprising at least one time interval [DT1, DT2] per a period of twenty-four hours, and a rate associated to this time interval [DT1, DT2],
- selecting means, located within the data concentrator, for performing comparisons of the rates of all time intervals [DT1, DT2] of all tariff tables, then determining the lowest rate for each time interval [DT1, DT2] in view to derive an advantageous tariff table which, for instance, can be memorized within the data concentrator,
- measuring means for determining a metering data measurement DTup by reading a counter consumption index CPT at each utility meter,
- means for generating utility meter messages DTup_{u,c} within each utility meter U1-U8; each of these utility meter messages comprising: the metering data measurement DTup, the utility meter identifier Uid, the data concentrator identifier DCid and the management center identifier Pid,
- utility meter sending means for transmitting these utility meter messages DTup_{u,c} to the proper data concentrator, i.e. to the data concentrator connected with the utility meters of these sending means,
- computing means for determining, on the basis of one or several metering data measurements DTup, a metering counter differential consumption value ΔCPT calculated by difference of two metering counter consumption indexes CPT measured by the utility meter within a time period interval ΔT defined by a first time T1 and a second time T2,
- assigning means for associating, to this metering counter differential consumption value ΔCPT, the utility management center P1-P3 which offers the lowest rate for the time period interval ΔT defined by times T1 and T2,
- data concentrator sending means for transmitting, from the data concentrator to the utility management center P1-P3 to which said utility meter U1-U8 is associated, a report containing at least, on the one hand the metering counter differential consumption value ΔCPT assigned to this management center P1-P3, and on the other hand the utility meter identifier Uid to which this value ΔCPT refers,
- a central processing unit for managing all the aforementioned means.

According to one embodiment, each utility meter of the system further comprises a clock readable by said measuring means for including, to the metering data measurement DTup, a time and date DT corresponding to the moment when the counter consumption index CPT was measured.

According to another embodiment, the destination data concentrator of the system comprises a memory for collecting, during a reporting period of time ΔRT, a plurality of calculated consumption values ΔCPT before sending them to the proper utility management center, for instance within the report transmitted by the sending means of the data concentrator at the end of the reporting period of time ΔRT.

Preferably, the system of the present invention further comprises means for securing the communications exchanged, on the one hand, between the utility meters and the destination data concentrator and, on the other hand, between the latter and at least one utility management center associated with these utility meters. Secured communications are carried out by common means, i.e. by signatures and encryption means applied to the utility meter messages DTup_{u,c} sent by the utility meters and to the reports sent by the destination data concentrator. Therefore, the system is provided with means for acquiring public key certificates, means to authenticate these certificates, means for producing session key (typically random session key), means for encrypting and decrypting messages with these keys and means for sending and receiving acknowledgment messages in case of completely successful transmission.

## Claims

1. Pricing method for utility consumptions within a smart grid comprising a plurality of utility meters (U1-U8) each associated and connected to at least one utility management center (P1-P3) through an intermediate data concentrator (C1-C4) identified by a data concentrator identifier DCid, each utility meter being identified by a utility meter identifier Uid and being adapted to produce and send utility meter messages DTup_{u,c} to said data concentrator, each data concentrator being adapted to produce and send reports to said management centers (P1-P3), each identified by a management center identifier Pid, said method comprising the steps of:
- receiving, by said data concentrator (C1-C4), at least a tariff table from each of said utility management centers (P1-P3), said tariff table comprising at least one time interval [DT1, DT2] per a period of twenty-four hours, and a rate associated to said time interval [DT1, DT2],
- selecting, by said data concentrator (C1-C4), the lowest rate for each time interval [DT1, DT2] among the rates of all time intervals of all tariff tables, in order to derive an advantageous tariff table,
- receiving, by said data concentrator (C1-C4), said utility meter messages DTup_{u,c} from said utility meter (U1-U8), each of these utility meter messages DTup_{u,c} comprising: a metering data measurement DTup reported by the utility meter which sent this message DTup_{u,c}, its utility meter identifier Uid, said data concentrator identifier DCid and said management center identifier Pid,
- determining, on the basis of one or several metering data measurements DTup, a metering counter differential consumption value ΔCPT calculated by difference of two metering counter consumption indexes CPT measured by said utility meter within a time period interval ΔT defined by a first time T1 and by a second time T2,
- assigning to said metering counter differential consumption value ΔCPT the utility management center (P1-P3) suggesting the lowest rate for the time period interval ΔT comprised between said first time T1 and said second time T2,
- establishing, for each management center (P1-P3), a report containing at least the metering counter differential consumption value ΔCPT assigned to this management center (P1-P3) together with the utility meter identifier Uid to which this value ΔCPT refers,
- sending said report from said data concentrator (C1-C4) to this utility management center (P1-P3).

2. Method of claim 1, wherein said metering data measurement DTup comprises at least one of said metering counter consumption indexes CPT.

3. Method of claim 2, wherein said metering data measurement DTup further comprises a time and date DT resulting from a clock readable by said utility meter and corresponding to the moment when said counter consumption index CPT was measured.

4. Method of claim 1, wherein said metering data measurement DTup comprises said metering counter differential consumption value ΔPT determined directly by said utility meter.

5. Method of claim 1, wherein a plurality of calculated consumption values ΔCPT are collected during a reporting period of time ΔRT and stored in a memory of the data concentrator (C1-C4) before to be sent, at the end of said reporting period of time ΔRT, from said data concentrator to the utility management center (P1-P3) to which said utility meter is associated, within said report.

6. Method of claim 5, wherein each of said consumption values ΔCPT is stored in said memory with the utility meter idendifier Uid to which this value ΔCPT refers, and said consumption values ΔCPT relate to the entire utility meters (U1-U8) associated to a single utility management center (P1-P3) and processed by said data concentrator.

7. Method of any of preceding claims, wherein said data concentrator (C1-C4) further receives, together with said tariff table, an information about the amount of available utility deliverable from each of said utility management centers (P1-P3).

8. Method of any of preceding claims, wherein, at each time said messages DTup_{u,c} or said reports have to be exchanged, it further comprises a step of establishing a secure communication respectively for each utility meter (U1-U8) connected to said data concentrator (C1-C4) and for each data concentrator (C1-C4) connected to said utility management center (P1-P3), said secure communication being carried out by signing and encrypting said messages DTup_{u,c} and said reports, and said messages DTup_{u,c} and said reports are processed respectively by said data concentrator (C1-C4) and by said utility management center (P1-P3) only if they are identified as being authentic by authentication means.

9. Method of any of preceding claims, wherein it further comprises a step of sending an acknowledgment from said data concentrator (C1-C4) towards said utility meter (U1-U8), in response to the reception of said utility meter message DTup_{u,c} sent by the latter.

10. Method of any of preceding claims, wherein sending of said utility meter message DTup_{u,c} is performed by the utility meter on request of the data concentrator after having received a transmission query from the latter.

11. Method of any of preceding claims, wherein the data concentrator sends a configuration message to said utility meter in order to update a reporting rate of the utility meter messages DTup_{u,c}.

12. Pricing system for utility consumptions within a smart grid comprising a plurality of utility meters (U1-U8) each associated and connected to at least one utility management center (P1-P3) through an intermediate data concentrator (C1-C4) identified by a data concentrator identifier DCid, each utility meters (U1-U8) being identified by a utility meter identifier Uid and being adapted to produce and send utility meter messages DTup_{u,c} to said data concentrator, each data concentrator being adapted to produce and send reports to said management centers (P1-P3), each identified by a management center identifier Pid, said system comprising:
- connecting means for establishing said communications through communication network links Luc, Lcp, connecting the data concentrator (C1-C4) to said utility meters, respectively to said utility management center,
- receiving means for receiving, by said data concentrator (C1-C4), at least a tariff table from each of said utility management centers (P1-P3), said tariff table comprising at least one time interval [DT1, DT2] per a period of twenty-four hours, and a rate associated to said time interval [DT1, DT2],
- selecting means for comparing, by said data concentrator (C1-C4), the rates of all time intervals [DT1, DT2] of all tariff tables and determining the lowest rate for each time interval [DT1, DT2] in order to derive and memorize an advantageous tariff table,
- measuring means for determining a metering data measurement DTup by reading a counter consumption index CPT at each utility meter,
- means for generating utility meter messages DTup_{u,c} within each utility meter (U1-U8), each of said utility meter messages comprising: said metering data measurement DTup, said utility meter identifier Uid, said data concentrator identifier DCid and said management center identifier Pid,
- utility meter sending means for transmitting said utility meter messages DTup_{u,c} to said data concentrator,
- computing means for determining, on the basis of one or several metering data measurements DTup, a metering counter differential consumption value ΔCPT calculated by difference of two metering counter consumption indexes CPT measured by said utility meter within a time period interval ΔT defined by a first time T1 and a second time T2,
- assigning means for assigning to said metering counter differential consumption value ΔCPT the utility management center (P1-P3) suggesting the lowest rate for the time period interval ΔT comprised between said first time T1 and said second time T2,
- data concentrator sending means for transmitting, from the data concentrator towards the utility management center (P1-P3) to which said utility meter (U1-U8) is associated, a report containing at least the metering counter differential consumption value ΔCPT assigned to this management center (P1-P3) together with the utility meter identifier Uid to which this value ΔCPT refers,
- a central processing unit for managing all of said means.

13. System of claim 12, wherein each utility meter further comprises a clock readable by said measuring means for including to said metering data measurement DTup a time and date DT corresponding to the moment when said counter consumption index CPT was measured.

14. System of any of preceding claims, wherein said data concentrator comprises a memory for collecting, during a reporting period of time ΔRT, a plurality of calculated consumption values ΔCPT before to be sent within said report, by said data concentrator sending means at the end of said reporting period of time ΔRT.

15. System of any of preceding claims, wherein it further comprises means for securing said communications by means of signatures and encryption means applied to said utility meter message DTup_{u,c} and report.
